# EUROPÄISCHE PATENTANMELDUNG

(11) **EP 3 879 646 A1**
(43) Veröffentlichungstag der Anmeldung: **15.09.2021**
(21) Anmeldenummer: 21157749.9
(22) Anmeldetag: 18.02.2021
(51) Int. Cl.: H01T 4/06, H02B 1/06, H02B 1/21

(54) **AUFNAHMEVORRICHTUNG FÜR EINE ÜBERSPANNUNGSSCHUTZ-EINHEIT**

(30) Priorität: 11.03.2020 DE 202020000983 U
(71) Anmelder: ABN GmbH, 74196 Neuenstadt (DE)
(72) Erfinder: HÖHN, Werner, 74196 Neuenstadt (DE); HOFMANN, Detlef, 74196 Neuenstadt (DE); LEJA, Mario, 74196 Neuenstadt (DE)
(74) Vertreter: Schmid, Barbara

(57) **Zusammenfassung**

Die Erfindung betrifft eine Aufnahmevorrichtung (10) für eine Überspannungsschutz-Einheit (12). Die Aufnahmevorrichtung (10) besitzt einen Sammelschienenträger (20), der über zumindest zwei Sammelschienen mit einem Schienenabstand von 185 Millimeter verläuft und an den zumindest zwei Sammelschienen befestigt ist, und eine Montageplatte (30), die auf dem Sammelschienenträger (20) befestigt ist. Auf der Montageplatte (30) ist zumindest eine Tragschiene (42) zur Befestigung einer Überspannungsschutz-Einheit (12) montiert.

## Beschreibung

### TECHNISCHES GEBIET

Unter Überspannungsschutz wird der Schutz elektrischer und elektronischer Geräte vor zu hohen elektrischen Spannungen verstanden. Überspannungen können beispielsweise durch Blitzeinschläge hervorgerufen werden. Auch kapazitive oder induktive Einkopplungen anderer Systeme können zu Überspannungen führen. Elektrostatische Entladungen (ESD) können ebenfalls Überspannungen zur Folge haben.

### STAND DER TECHNIK

Überspannungsschutz wird in drei Bereiche aufgeteilt, den Grobschutz (Typ I), den Mittelschutz (Typ II) und den Feinschutz (Typ III). Der Grobschutz (auch Blitzstromableiter genannt) soll den Energieinhalt eines Blitzes ableiten und die verbleibende Restspannung auf Werte kleiner als 1.300 V begrenzen. Der Grobschutz wird in der Regel in der Nähe der Energieeinspeisung angeordnet. Der Mittelschutz findet sich üblicherweise in den Etagenverteilern eines Gebäudes und soll die verbleibende Restspannung auf Werte kleiner als 600 V begrenzen. Der Feinschutz schützt Steckdosen und Steckverbindungen aller anderen Leitungen. In der Regel übernehmen die Hersteller der elektrischen und elektronischen Geräte den Feinschutz, der dafür sorgt, dass die verbleibende Spannung auf ein für die jeweils angeschlossenen Geräte vertretbares Maß reduziert wird.

Beim Überspannungsschutz werden häufig sogenannte Kombiableiter eingesetzt, die sowohl für den Grobschutz als auch für den Mittelschutz zuständig sind. Die Positionierung der Kombiableiter sollte so nah wie möglich am Einspeisepunkt erfolgen. Die Anschlussleitungen der Überspannungsschutz-Einheiten sollen zur Erhaltung des Schutzpegels so kurz wie möglich gehalten werden. Wird die maximale Leitungslänge entsprechend der Herstellerangabe überschritten, muss eine Reduzierung des Schutzpegels berechnet werden. Daher hat sich ein Einbau vor dem Hauptzähler an der Sammelschiene bewährt.

Sollen Überspannungsschutz-Einheiten wie beispielsweise Kombiableiter auf Sammelschienen mit 185 Millimetern Abstand montiert werden, wird in der Regel ein zusätzlicher Montageraum benötigt, der zusätzlich zum Sammelschienenabgriff installiert werden muss. Dies macht eine Montage der Überspannungsschutz-Einheiten in einem Energieverteiler oder einer Zähleranlage für halbindirekte Messung häufig platz- und zeitaufwändig.

Bei einer Steckdosenleiste zur Installation von Überspannungsschutz-Einheiten kann keine Verplombung der Überspannungsschutz-Einheiten erfolgen. Der Nutzer hat somit die Möglichkeit, über die Montageöffnungen an der Vorderseite der Überspannungsschutz-Einheiten unbemerkt vom Netzbetreiber an die Sammelschienen zu kommen. Bei einem gegebenenfalls notwendigen Austausch der Überspannungsschutz-Einheiten müsste die gesamte Montageeinheit aus dem Zählerschrank entnommen und zerlegt werden. Dies ist mit großem Arbeitsaufwand verbunden und entsprechend wirtschaftlich ungünstig.

### DARSTELLUNG DER ERFINDUNG

Ausgehend von diesem vorbekannten Stand der Technik liegt der Erfindung die Aufgabe zugrunde, eine verbesserte Aufnahmevorrichtung für eine Überspannungsschutz-Einheit anzugeben, die eine besonders einfache Montage der Überspannungsschutz-Einheit erlaubt und die Leitungslängen zum Anschluss der Überspannungsschutz-Einheit an das Sammelschienensystem auf ein Minimum begrenzt.

Die erfindungsgemäße Aufnahmevorrichtung für eine Überspannungsschutz-Einheit ist durch die Merkmale des Hauptanspruchs 1 gegeben. Sinnvolle Weiterbildungen der Erfindung sind Gegenstand von sich an diesen Anspruch anschließenden weiteren Ansprüchen.

Die erfindungsgemäße Aufnahmevorrichtung für eine Überspannungsschutz-Einheit besitzt einen Sammelschienenträger, der über zumindest zwei Sammelschienen mit einem Schienenabstand von 185 Millimetern verläuft und an den zumindest zwei Sammelschienen befestigt ist. Auf dem Sammelschienenträger ist eine Montageplatte befestigt. Auf der Montageplatte ist zumindest eine Tragschiene montiert, die der Befestigung einer Überspannungsschutz-Einheit dient. Durch die erfindungsgemäße Aufnahmevorrichtung für eine Überspannungsschutz-Einheit wird kein zusätzlicher Montageraum benötigt, der zusätzlich zum Sammelschienenträger als Sammelschienenabgriff installiert werden müsste. Die Überspannungsschutz-Einheit kann werkzeuglos montiert werden, eine M12-Verriegelung der Überspannungsschutz-Einheit ist möglich.

Die erforderlichen Rastermaße bezüglich der Tragschienen können nach wie vor eingehalten werden. Darüber hinaus bietet die Aufnahmevorrichtung die Möglichkeit, weitere Bauelemente an der zumindest einen Tragschiene zu montieren. Die Breite der gesamten Aufnahmevorrichtung kann auf ein Rastermaß von 100 Millimetern beschränkt werden.

Der Einbau der verschiedenen elektrischen Bauelemente, beispielsweise auch der Überspannungsschutz-Einheit, erfolgt in der Regel durch eine Befestigung der Bauelemente auf Tragschienen. Vorzugsweise kann die Tragschiene zur Befestigung der Überspannungsschutz-Einheit als Hutschiene ausgebildet sein.

Bei der eingesetzten Überspannungsschutz-Einheit kann es sich vorzugsweise um einen Kombiableiter handeln. Grundsätzlich ist die erfindungsgemäße Aufnahmevorrichtung für sämtliche Überspannungsschutz-Einheiten geeignet, insbesondere auch für größere Einheiten, die bislang nicht in einem Zählerschrank platziert werden konnten. Zur Befestigung der Aufnahmevorrichtung an den Sammelschienen kann in einer konstruktiv besonders einfachen Ausführungsform ein Durchbruch in der Montageplatte vorhanden sein. In dem Durchbruch kann eine Kunststoffschraube angeordnet sein, durch die die Montageplatte in der Einpressmutter der Sammelschiene fixiert werden kann. Dadurch kann verhindert werden, dass der Sammelschienenträger von den Sammelschienen heruntergeschoben werden kann. Vorzugsweise kann die Montageplatte eine seitliche Kragnase aufweisen, innerhalb der der Durchbruch für die Kunststoffschraube angeordnet ist.

Die Montageplatte kann in einer besonders bevorzugten Ausführungsform zumindest teilweise durch eine Haube abgedeckt sein. Insbesondere kann die Montageplatte vollständig oder nahezu vollständig von der Haube abgedeckt sein. Die Haube dient dem Schutz der einzelnen Komponenten der Aufnahmevorrichtung. Gleichzeitig dient die Haube auch als Berührschutz für den Bediener der Vorrichtung.

Die Haube kann vorzugsweise durchsichtig sein. Auf diese Weise ist eine Sichtkontrolle durch den Bediener der Vorrichtung möglich, ohne die Haube entfernen zu müssen. Durch eine solche Sichtkontrolle kann beispielsweise bereits überprüft werden, ob die Überspannungsschutz-Einheiten, insbesondere die Kombiableiter, funktionsfähig sind. Auch eine Kontrolle, ob der Anschluss an der Sammelschiene ordnungsgemäß erfolgt ist oder ob intern durch Abzweigungen Strom aus dem ungezählten Bereich entnommen wird, ist durch eine durchsichtige Haube problemlos möglich. Eine solche Kontrolle ist immer dann relevant, wenn die Überspannungsschutz-Einheiten im netzseitigen Anschlussraum installiert sind.

Um die Haube an der Montageplatte zu befestigen, kann die Montageplatte zumindest eine Bohrung aufweisen. Vorzugsweise können zumindest zwei Bohrungen in der Montageplatte vorhanden sein, durch die die Haube an der Montageplatte angeschraubt werden kann. Bei der zumindest einen Bohrung zur Befestigung der Haube kann es sich insbesondere um eine Gewindebohrung handeln. Dadurch kann die Haube nur von vorne auf die Montageplatte aufgesetzt und festgeschraubt werden, ohne dass eine Gegenmutter auf der Rückseite der Montageplatte notwendig wäre.

Die Haube kann dabei vorzugsweise mittels einer oder mittels zweier Plombierschrauben an den Bohrungen der Montageplatte befestigt sein. Die Plombierschrauben können mittels einer Plombe geschützt werden, so dass ein unbefugtes Entfernen der Haube unmittelbar erkannt werden kann. Durch die Möglichkeit der Plombierung kann die erfindungsgemäße Vorrichtung nicht nur im anlagenseitigen Anschlussraum montiert werden, auch eine Montage im netzseitigen Anschlussraum ist auf diese Weise möglich. Der Nutzer hat bei der erfindungsgemäßen Vorrichtung keine Möglichkeit, an die stromführenden Sammelschienen oder die Anschlussleitungen zu kommen, ohne die Plombierung zu lösen oder die Haube zu beschädigen. Dadurch kann Stromdiebstahl durch den Nutzer effektiv verhindert werden; gleichzeitig kann der Personenschutz gewährleistet werden.

Bei den Plombierschrauben kann es sich insbesondere um Kunststoffschrauben handeln.

Nach einem erfolgreichen Schutz der elektronischen Bauteile vor einer Überspannung ist der Überspannungsschutz defekt. Dies wird in der Regel durch einen roten Indikator hinter einem Schauglas der Überspannungsschutz-Einheit angezeigt. In diesem Fall muss ein Austausch der Überspannungsschutz-Einheit erfolgen. Die Verwendung einer Haube, die lediglich über zwei Plombierschrauben befestigt werden muss, ermöglicht somit einen einfachen Austausch der Überspannungsschutz-Einheiten, wenn diese ausgelöst haben.

Die Höhe der Aufnahmevorrichtung inklusive der Haube überschreitet nicht den Platzbedarf einer Sicherungslastschaltleiste.

Weitere Vorteile und Merkmale der Erfindung sind den in den Ansprüchen ferner angegebenen Merkmalen sowie dem nachstehenden Ausführungsbeispiel zu entnehmen.

### KURZE BESCHREIBUNG DER ZEICHNUNG

Die Erfindung wird im Folgenden anhand des in der Zeichnung dargestellten Ausführungsbeispiels näher beschrieben und erläutert. Es zeigen:
- Fig. 1: eine Draufsicht auf die erfindungsgemäße Aufnahmevorrichtung mit zwei an den Tragschienen befestigten Kombiableitern,
- Fig. 2: einen Längsschnitt durch die Aufnahmevorrichtung gemäß Fig. 1 mit durch zwei Plombierschrauben befestigter Haube und
- Fig. 3: eine perspektivische Darstellung der Aufnahmevorrichtung gemäß Fig. 1 und 2 mit entfernten Kombiableitern und Haube zum Abdecken der Montageplatte.

### WEGE ZUM AUSFÜHREN DER ERFINDUNG

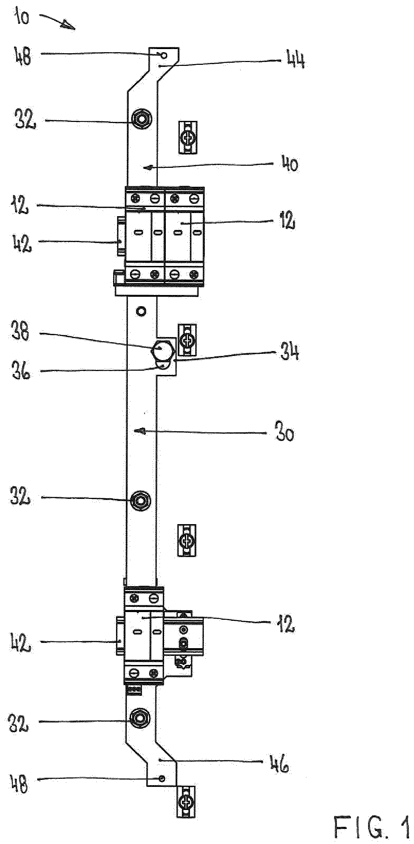

Die erfindungsgemäße Aufnahmevorrichtung 10 für eine Überspannungsschutz-Einheit 12 ist in den Fig. 1 bis 3 dargestellt.

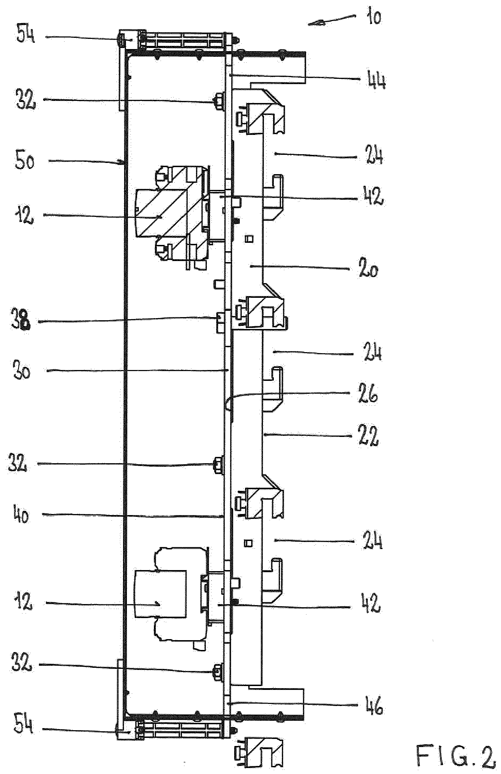

Die Aufnahmevorrichtung 10 besitzt einen Sammelschienenträger 20, der im vorliegenden Beispielsfall über drei hier nicht dargestellte Sammelschienen mit einem Schienenabstand von 185 Millimetern verläuft. An der Rückseite 22 des Sammelschienenträgers 20 sind dazu drei Abgriffseinrichtungen 24 vorhanden (siehe Fig. 2). An der Vorderseite 26 des Sammelschienenträgers 20 ist eine Montageplatte 30 vorhanden.

Die Montageplatte 30 ist im vorliegenden Beispielsfall mittels dreier Schrauben 32 an dem Sammelschienenträger 20 befestigt. Im vorliegenden Beispielsfall weist die Montageplatte 30 eine seitliche Kragnase 34 auf, die etwa auf halber Höhe der Montageplatte 30 und damit auf Höhe der mittleren Abgriffseinrichtung 24 des Sammelschienenträgers 20 vorhanden ist. In der seitlichen Kragnase 34 ist ein Durchbruch 36 vorhanden (siehe Fig. 1). Über den Durchbruch 34 kann eine Befestigung der Montageplatte 30 und damit auch des Sammelschienenträgers 20 an den Sammelschienen erfolgen. Dafür wird eine Kunststoffschraube 38 durch den Durchbruch 34 geführt und in der Einpressmutter der Sammelschiene fixiert.

An der Vorderseite 40 der Montageplatte 30 sind im vorliegenden Beispielsfall insgesamt zwei Tragschienen 42 befestigt. Die Tragschienen 42 sind im vorliegenden Beispielsfall als Hutschienen ausgebildet. An der unteren Tragschiene 42 ist eine Überspannungsschutz-Einheit 12 in Form eines Kombiableiters montiert; an der oberen Tragschiene 42 sind insgesamt zwei Kombiableiter 12 befestigt. Die Kombiableiter 12 besitzen hier nicht dargestellte Aderleitungen, die mittels Sammelschienenklemmen auf die darunterliegende Sammelschiene montiert werden können.

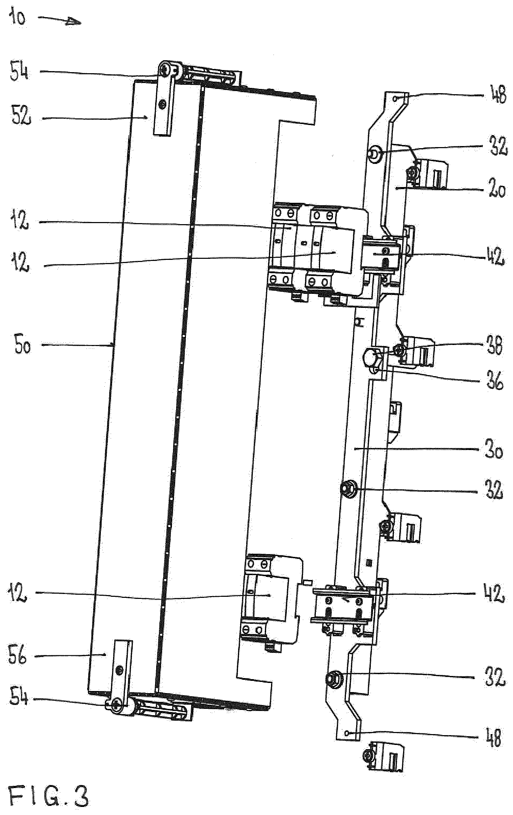

An dem oberen Endbereich 44 und dem unteren Endbereich 46 der Montageplatte 40 ist jeweils eine Gewindebohrung 48 vorhanden. Die Gewindebohrungen 48 dienen der Befestigung einer Haube 50 (siehe Fig. 2 und 3). Die Haube 50 ist quaderförmig ausgebildet und kann die Montageplatte 40 vollständig abdecken. Die Haube 50 ist dabei so hoch ausgebildet, dass die Kombiableiter 12 im montierten Zustand unter die Haube 50 passen. Gleichzeitig ist die Haube 50 lediglich so hoch ausgebildet, dass eine Montage im Energieverteiler (Kabelverteilerschrank) oder im Zählerplatz für halbindirekte Messung möglich ist, da der Platzbedarf einer Sicherungslastschaltleiste nicht überschritten wird.

An dem oberen Endbereich 52 der Haube 50 ist eine Plombierschraube 54 befestigt. Die Plombierschraube 54 ist aus Kunststoff und kann mit ihrem Gewinde in der oberen Gewindebohrung 48 der Montageplatte 40 befestigt werden. Eine vergleichbare Plombierschraube 54 ist auch an dem unteren Endbereich 56 der Haube 50 vorhanden. Nach dem Befestigen der Haube 50 an der Montageplatte 40 können die beiden Plombierschrauben 54 jeweils mittels einer hier nicht dargestellten Plombe gesichert werden. Dadurch kann eine unbefugte Manipulation der Haube 50 bei einer Sichtkontrolle unproblematisch festgestellt werden. Dies ermöglicht den Einbau der erfindungsgemäßen Aufnahmevorrichtung 10 auch im netzseitigen Anschlussraum.

Die Haube 50 ist im vorliegenden Beispielsfall durchsichtig ausgebildet, so dass eine Sichtkontrolle der Aufnahmevorrichtung 10, insbesondere auch eine Sichtkontrolle der installierten Überspannungsschutz-Einheiten 12 möglich ist. Als Material für eine solche durchsichtige Haube 50 kann beispielsweise ein Polycarbonat verwendet werden.

## Patentansprüche

1. Aufnahmevorrichtung (10) für eine Überspannungsschutz-Einheit (12)
- mit einem Sammelschienenträger (20), der über zumindest zwei Sammelschienen mit einem Schienenabstand von 185 Millimeter verläuft und an den zumindest zwei Sammelschienen befestigt ist,
- mit einer Montageplatte (30), die auf dem Sammelschienenträger (20) befestigt ist,
- mit zumindest einer auf der Montageplatte (30) montierten Tragschiene (42) zur Befestigung einer Überspannungsschutz-Einheit (12).

2. Aufnahmevorrichtung nach Anspruch 1,
- **dadurch gekennzeichnet, dass**
- die zumindest eine Tragschiene (42) als Hutschiene (42) ausgebildet ist.

3. Aufnahmevorrichtung nach Anspruch 1 oder 2,
- **dadurch gekennzeichnet, dass**
- die Überspannungsschutz-Einheit (12) als Kombiableiter (12) ausgebildet ist.

4. Aufnahmevorrichtung nach einem der vorstehenden Ansprüche,
- **dadurch gekennzeichnet, dass**
- in der Montageplatte (30) zumindest ein Durchbruch (36) vorhanden ist,
- in dem Durchbruch (36) eine Kunststoffschraube (38) angeordnet ist, durch die die Montageplatte (30) in der Einpressmutter der Sammelschiene fixierbar ist.

5. Aufnahmevorrichtung nach Anspruch 4,
- **dadurch gekennzeichnet, dass**
- die Montageplatte (30) eine seitliche Kragnase (34) aufweist,
- der Durchbruch (36) innerhalb der seitlichen Kragnase (34) angeordnet ist.

6. Aufnahmevorrichtung nach einem der vorstehenden Ansprüche,
- **dadurch gekennzeichnet, dass**
- die Montageplatte (30) durch eine Haube (50) zumindest teilweise, insbesondere vollständig abdeckbar ist.

7. Aufnahmevorrichtung nach Anspruch 6,
- **dadurch gekennzeichnet, dass**
- die Haube (50) durchsichtig ausgebildet ist.

8. Aufnahmevorrichtung nach Anspruch 6 oder 7,
- **dadurch gekennzeichnet, dass**
- die Montageplatte (30) zumindest eine Bohrung (48), insbesondere zumindest zwei Bohrungen (48) aufweist, durch die die Haube (50) an der Montageplatte (30) anschraubbar ist.

9. Aufnahmevorrichtung nach Anspruch 8,
- **dadurch gekennzeichnet, dass**
- die zumindest eine Bohrung (48) zur Befestigung der Haube (50) als Gewindebohrung (48) ausgebildet ist.

10. Aufnahmevorrichtung nach Anspruch 8 oder 9,
- **dadurch gekennzeichnet, dass**
- die Haube mittels einer Plombierschraube (54) an der zumindest einen Bohrung der Montageplatte (30) befestigbar ist,
- die Plombierschraube (54) mittels einer Plombe schützbar ist.
